# FASCICULE DE BREVET EUROPEEN

(11) **EP 3 126 126 B1**
(45) Date de publication et mention de la délivrance du brevet: **06.01.2021**
(21) Numéro de dépôt: 15716002.9
(22) Date de dépôt: 02.04.2015
(51) Int. Cl.: B29C 70/44, B29C 70/54, B29C 70/40, B29C 35/02, B29C 33/02

(54) **PROCÉDÉ ET INSTALLATION DE RÉALISATION D'UNE PIÈCE EN MATÉRIAU COMPOSITE**
VERFAHREN UND ANLAGE ZUR HERSTELLUNG EINES VERBUNDSTOFFMATERIALTEILS
PROCESS AND INSTALLATION FOR PRODUCING A COMPOSITE MATERIAL PART

(30) Priorité: 03.04.2014 FR 1452946
(43) Date de publication de la demande: 08.02.2017
(73) Titulaire: AIRBUS (SAS), 31700 Blagnac (FR)
(72) Inventeur: CINQUIN, Jacques, F-91430 Igny (FR)
(74) Mandataire: Gicquel, Olivier Yves Gérard
(86) Numéro de dépôt international: PCT/EP2015/057309
(87) Numéro de publication internationale: WO 2015/150515

(56) Documents cités:
- EP-A1- 2 511 080
- JP-A- S5 667 217
- JP-A- S6 044 328
- US-A- 6 146 576

## Description

### ARRIERE-PLAN DE L'INVENTION

### Domaine de l'invention

La présente invention concerne un procédé de réalisation de pièces en matériaux composites à renfort fibreux.

### Arrière-plan technologique

En raison de leurs avantages techniques, les matériaux composites connaissent un accroissement de leur diffusion dans les domaines technologiques les plus variés et occupent une place de plus en plus importante dans des secteurs comme l'aéronautique, le spatial ou encore l'automobile.

A titre purement illustratif, dans le domaine aéronautique, des éléments structuraux d'aéronef sont réalisés en matériau composite afin de réduire la masse embarquée.

Typiquement, les pièces réalisées en matériau composite comprennent une matrice en résine renforcée par des fibres. Ces pièces sont généralement obtenues en empilant sur un outillage des couches de fibres pré-imprégnées de résine. Après la dépose des couches de fibres, l'ensemble est recouvert entre autre d'une vessie puis introduit dans un autoclave et soumis à un cycle de température et de pression de manière à obtenir la polymérisation de la pièce.

Lors de ces étapes de polymérisation, les températures sont généralement de l'ordre de 200°C pour les pièces conventionnelles et peuvent atteindre 350°C pour les matériaux pour application haute température comme les polyimides.

Toutefois, on observe que beaucoup d'énergie est nécessaire pour chauffer les outillages, souvent métalliques, et le volume de l'étuve ou de l'autoclave utilisé, ayant de graves répercussions financières du point de vue de la consommation d'énergie.

En outre, de par les fortes quantités d'énergies demandées et la forte inertie thermique des moyens utilisés, on est souvent limité à des vitesses de chauffe inférieures à 1 °C/minute.

Or, les cadences de production devenant de plus en plus élevées, les moyens traditionnellement utilisés seront vite limités, sauf à multiplier leur nombre et par conséquent, à accroître de manière substantielle les coûts de fabrication, ce qui est incompatible avec les enjeux économiques des sociétés fabricantes.

Les procédés de polymérisation par ionisation représentent une alternative intéressante car ils permettent une polymérisation et/ou réticulation sans élévation de température.

Ainsi, il est possible d'obtenir des matériaux composites de bonne qualité en un temps relativement court et en utilisant des énergies relativement faibles.

Toutefois, aucun aboutissement industriel n'a émergé à ce jour.

On connaît dans l'état de la technique la demande de brevet japonais N° JP S60 44328, qui décrit un procédé de moulage d'une plaque de plastique renforcée.

On connaît également dans l'état de la technique la demande de brevet japonais N° JP S56 67217, qui se rapporte au moulage de matériel composite.

On connaît également dans l'état de la technique la demande de brevet européen N° EP 2 511 080 A1, qui se rapporte à un dispositif pour la préparation de préformes de composants renforcés en fibres de carbone, comprenant un moule de préformage qui peut être immobilisé sur un banc de travail de manière électriquement isolée, et muni d'au moins deux électrodes dans des positions dans lesquelles elles sont en contact avec des zones d'extrémité opposées de la préforme pour générer un circuit électrique résistif à travers les fibres de carbone de la préforme et ainsi activer un liant présent dans la préforme par chauffage.

Il existe donc un besoin pressant pour un procédé de durcissement de pièces composites à matrice thermodurcissable ou de consolidation en température de pièces composites à matrice thermoplastique, qui soit économique tout en autorisant une augmentation substantielle des cadences de production.

La présente invention vise à pallier ces divers inconvénients de l'art antérieur en proposant un procédé et une installation pour la réalisation de pièces en matériau composite, simple dans leur conception et dans leur mode opératoire, économiques et permettant de limiter l'énergie thermique dépensée pour une même efficacité de polymérisation.

### BREVE DESCRIPTION DE L'INVENTION

A cet effet, l'invention concerne un procédé de réalisation d'une pièce en matériau composite dans lequel on dépose des plis de fibres continues et électriquement conductrices pour former un empilement de plis sur un support.

Selon l'invention, au moins la face dudit support portant ledit empilement étant électriquement isolante, on réalise les étapes suivantes:
a) introduire une borne électrique entre les extrémités d'au moins deux plis placés directement l'un au dessus de l'autre dans ledit empilement, et sur au moins deux côtés opposés de ces plis,
b) lorsque lesdites fibres sont sèches, introduire une résine pour imprégner lesdites fibres,
c) faire circuler un courant entre lesdites bornes électriques au travers desdits plis pour durcir ladite résine par chauffage par effet Joule ou porter à l'état liquide ladite résine par chauffage par effet Joule en vue d'assurer la consolidation de ladite résine.

Les fibres étant continues et électriquement conductrices, en plaçant des bornes sur au moins deux côtés opposées de l'empilement, on établit un circuit électrique au moyen desdites fibres.

Des bornes peuvent ainsi être disposées entre tous les plis ou tous les deux ou trois plis voire plus, en fonction des conditions de polymérisation de l'empilement.

Bien entendu, l'homme du métier comprendra que l'étape b) est purement optionnelle puisqu'il peut s'agir d'un empilement de fibres pré imprégnées.

De préférence, le support est électriquement isolant ou au moins la face de ce support recevant ledit empilement est électriquement isolante.

Les matériaux composites auxquels s'applique le procédé de la présente invention sont des matériaux constitués d'une résine et d'un renfort fibreux destiné à conférer des propriétés particulières à ces matériaux. En particulier, ces matériaux composites sont constitués d'un renfort fibreux se présentant sous forme de plis, lequel assure la résistance et la rigidité des pièces, et d'une matrice organique assurant la liaison entre les plis de fibres. Les fibres continues et électriquement conductrices sont en général en carbone.

De manière avantageuse, le présent procédé de réalisation d'une pièce en matériau composite autorise la fabrication de pièces composites similaires aux pièces polymérisées ou consolidées de manière traditionnelles mais avec un coût énergétique mieux contrôlé et des cadences de production plus importantes.

Il trouve des applications dans les domaines mettant en œuvre des pièces composites tels que le spatial, l'aéronautique, l'automobile, le nautique,

Dans différents modes de réalisation particuliers de ce procédé, chacun ayant ses avantages particuliers et susceptibles de nombreuses combinaisons techniques possibles:
- ledit empilement présentant une dimension supérieure le long d'au moins un des axes longitudinal et transversal de ladite pièce, on détoure l'ensemble durci obtenu à l'étape c) aux cotes de la pièce à réaliser.

On découpe ainsi l'ensemble obtenu aux dimensions finales de la pièce à réaliser. Avantageusement, on peut découper l'ensemble obtenu au droit de l'extrémité de chaque borne placée dans ledit ensemble.
- à l'étape a), on introduit au moins lesdites bornes électriques entre les extrémités de deux plis placés directement l'un au dessus de l'autre au centre dudit empilement pour chauffer cet empilement à cœur,
- on dépose au moins certains desdits plis de l'empilement de sorte que les fibres de ces plis présentent des orientations différentes par rapport à un axe principal de cet empilement.

En ayant des orientations de fibres différentes, on obtient ainsi une meilleure distribution de la chaleur dans l'empilement.

A titre purement illustratif, chaque pli étant formé de fibres unidirectionnelles, un premier pli présente un angle d'inclinaison de 0° par rapport à l'axe longitudinal de l'empilement, le pli immédiatement superposé sur ce premier pli présente un angle d'inclinaison de 45° par rapport à cet axe longitudinal tandis qu'un troisième pli placé directement au dessus du deuxième pli présente un angle d'inclinaison de 90°par rapport audit axe longitudinal.
- on introduit au moins un capteur de température dans ledit empilement ou on place au moins un capteur de température à la surface externe dudit empilement et on régule la puissance électrique en fonction d'un profil de température demandé,
- à l'étape b), on imprègne lesdits plis d'une résine thermodurcissable ou thermoplastique.

L'imprégnation de ladite résine est réalisée par dépression.
- lesdits plis de fibres sont des plis de fibres unidirectionnelles ou des plis tissés, c'est-à-dire présentant deux orientations des fibres à 90° dans un même pli.

La présente divulgation concerne une installation pour la mise en œuvre du procédé de fabrication d'une pièce en matériau composite tel que décrit précédemment.

Cette installation comprend :
- un moule dont au moins la surface destinée à supporter ledit empilement est électriquement isolante,
- au moins deux bornes électriques,
- une source d'alimentation électrique, et
- un circuit d'alimentation pour relier lesdites bornes électriques à ladite source.

Bien entendu, lorsqu'il est nécessaire d'introduire une résine thermodurcissable ou thermoplastique pour imprégner les plis de l'empilement avant l'étape c), cette installation comporte un dispositif d'injection.

La température de ce dispositif d'injection peut être régulée afin de conserver le matériau à injecter dans le moule, restant dans le dispositif après injection, à une température empêchant sa polymérisation.

Dans différents modes de réalisation particuliers de cette installation, chacun ayant ses avantages particuliers et susceptibles de nombreuses combinaisons techniques possibles:
- lesdites bornes électriques sont des clinquants ou des fils métalliques,
- cette installation comprend un moyen de pressage pour exercer une pression sur ledit empilement lors de la phase de polymérisation.

Ce moyen de pressage permet de provoquer un défoisonnement visant à chasser l'air emprisonné entre les plis et autour des fibres lors de l'étape de polymérisation. On réduit ainsi la porosité et on chasse l'air et les solvants lors de cette étape de polymérisation.
- ledit moule est réalisé dans un matériau électriquement isolant tel qu'une matière composite à base de fibres de verre ou de bois traité ou de toute autre matière non conductrice d'électricité.

Ce moule peut comporter un demi-moule fixe dont la surface externe est destinée à porter ledit empilement et une vessie d'étanchéité destinée à recouvrir au moins l'empilement en vue de sa polymérisation.
- cette installation comprend un ou plusieurs capteurs de température reliés à une unité de contrôle pour réguler la puissance électrique délivrée par ladite source d'alimentation électrique en fonction d'un profil de température demandé.

### BREVE DESCRIPTION DES DESSINS

D'autres avantages, buts et caractéristiques particulières de la présente invention ressortiront de la description qui va suivre faite, dans un but explicatif et nullement limitatif, en regard des dessins annexés, dans lesquels :
- la figure 1 représente schématiquement une vue en coupe et de face d'une installation pour la réalisation d'une pièce en matériau composite,
- la figure 2 est une vue partielle et de dessus d'un empilement de plis dans lequel des bornes électriques ont été disposés entre l'ensemble des bords de deux plis successifs ;

### DESCRIPTION DETAILLEE DE MODES DE REALISATION DE L'INVENTION

Tout d'abord, on note que les figures ne sont pas à l'échelle.

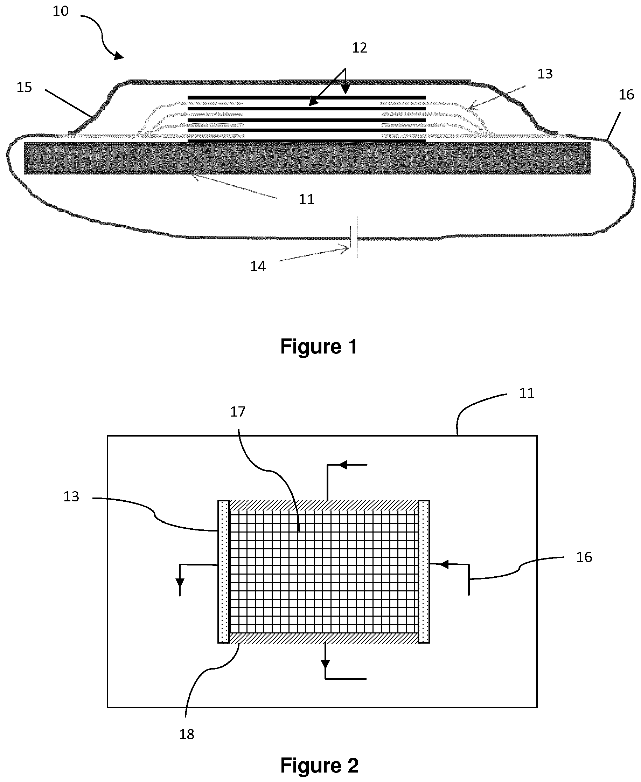

La Figure 1 représente schématiquement une vue en coupe et de face d'une installation 10 pour la réalisation d'une pièce en matériau composite selon un mode de réalisation particulier du procédé de la présente invention.

Cette pièce est ici réalisée en empilant sur un demi-moule 11 de forme plane, des plis 12 de fibres pré-imprégnées de résine. Bien entendu, cet outillage 11 pourrait présenter une forme non plane telle que convexe, en fonction de la forme finale à conférer à ladite pièce. Ce demi-moule 11 est ici réalisé dans un matériau électriquement isolant tel qu'un matériau composite à base de fibres de verre.

Chaque pli 12 est ici formé de fibres unidirectionnelles, continues et électriquement conductrices telles que des fibres de carbone, ces plis étant déposés par exemple à l'aide d'une machine de drapage (non représentée).

Entre deux plis 12 successifs de l'empilement ainsi réalisé, sont placés deux clinquants 13 métalliques disposés sur deux côtés opposés des plis 12 et de manière tangentielle, ou sensiblement tangentielle, à la direction définie par l'orientation des fibres unidirectionnelles de ces plis.

Ces clinquants 13 métalliques qui sont reliés à un circuit d'alimentation électrique alimenté par une source de courant 14, définissent des bornes électriques qui permettent l'introduction d'un courant électrique dans la pièce à polymériser au moyen des fibres des plis reliant électriquement lesdites bornes 13 d'un bord à l'autre de l'empilement. Ces clinquants 13 métalliques sont, par exemple, des plaques en cuivre de forme rectangulaire.

Si de manière classique, le nombre de plis 12 déposés dépend de l'épaisseur de la pièce à réaliser en prenant en compte un coefficient de diminution de l'épaisseur de l'empilement après compactage lors de la phase de polymérisation, au moins une des dimensions longitudinale et transversale de chaque pli est supérieure à celle de la pièce à réaliser pour accueillir ces bornes.

Après la dépose des plis 12 de fibres pré-imprégnées et des clinquants 13 métalliques, l'ensemble est recouvert entre autre d'une vessie 15 autorisant le passage hermétique des éléments 16 de liaison électrique du circuit d'alimentation tels que des fils électriques.

En outre, une mise en pression de l'empilement lors de l'étape de polymérisation est assurée par un moyen de pressage (non représenté). Ce moyen de pressage peut par exemple comprendre une ou plusieurs réglettes se déplaçant le long de rails de guidage verticaux.

Par effet Joule, on assure une élévation de la température du matériau avec une source de chaleur placée directement au cœur de la matière à polymériser ce qui limite avantageusement l'énergie requise à la polymérisation de la pièce pour une même efficacité de polymérisation.

Une ou plusieurs sondes de température (non représentées) introduites dans l'ensemble ainsi obtenu, par exemple directement dans la matière à polymériser, permettent de réguler la puissance électrique délivrée par la source 14 d'alimentation en fonction du profil de température demandé.

De manière avantageuse, pour les cas de pièces de faible épaisseur ou de matière à faible exothermie de réaction, les vitesses de montée en température ne seront plus limitées par les inerties thermiques des outillages et des moyens chauffants de l'état de l'art.

Une fois l'étape de polymérisation achevée, on découpe l'ensemble durci ainsi obtenu aux dimensions finales de la pièce à réaliser ce qui revient notamment à éliminer les parties de cet ensemble ayant reçu, ou encore placées au droit, des clinquants 13 métalliques.

La Figure 2 est une vue partielle et de dessus d'un empilement de plis mis en œuvre dans un autre mode de réalisation du procédé de la présente invention. Les éléments de la Figure 2 portant les mêmes références que ceux de la Figure 1 représentent les mêmes objets lesquels ne seront pas décrits de nouveau ci-après.

Cet empilement de plis a été obtenu par la dépose de plis 17 tissés, c'est-à-dire des plis dans chacun desquels les fibres présentent une orientation à 90° les unes des autres. Par ailleurs, des bornes électriques 13, 18 sont placées entre deux plis 17 tissés sur tous les côtés définis par ces deux plis.

Bien entendu, et alternativement, des premières bornes 13 auraient pu être disposées entre deux premiers plis 17 au niveau de deux premiers bords opposés de ces premiers plis en alternance avec des secondes bornes 18 placées quant à elles entre deux seconds plis 17 au niveau de deux seconds bords opposés de ces seconds plis. De préférence, ces deux premiers et deux seconds plis ont un pli tissé 17 en commun de sorte qu'il s'agit d'un empilement de trois plis successifs.

On s'assure ainsi d'une meilleure répartition dans l'empilement de l'énergie produite par effet Joule.

## Revendications

1. Procédé de réalisation d'une pièce en matériau composite dans lequel on dépose des plis (12) de fibres continues et électriquement conductrices pour former un empilement de plis (12) sur un support (11),
**caractérisé en ce qu'**au moins la face dudit support (11) portant ledit empilement est électriquement isolante, et **en ce qu'**on réalise les étapes suivantes:
a) introduire une borne (13, 18) électrique entre les extrémités d'au moins deux plis (12) placés directement l'un au dessus de l'autre dans ledit empilement, et sur au moins deux côtés opposés de ces plis (12),
b) lorsque lesdites fibres sont sèches, introduire une résine pour imprégner lesdites fibres,
c) faire circuler un courant entre lesdites bornes (13, 18) électriques au travers desdits plis (12) pour durcir ladite résine par chauffage par effet Joule ou porter à l'état liquide ladite résine par chauffage par effet Joule en vue d'assurer sa consolidation.

2. Procédé selon la revendication 1, **caractérisé en ce que** ledit empilement présentant une dimension supérieure le long d'au moins un des axes longitudinal et transversal de ladite pièce, on détoure l'ensemble durci obtenu à l'étape c) aux cotes de la pièce à réaliser.

3. Procédé selon la revendication 1 ou 2, **caractérisé en ce qu'**à l'étape a), on introduit au moins lesdites bornes (13, 18) électriques entre les extrémités de deux plis (12) placés directement l'un au dessus de l'autre au centre dudit empilement pour chauffer cet empilement à cœur.

4. Procédé selon l'une quelconque des revendications 1 à 3, **caractérisé en ce qu'**on dépose au moins certains desdits plis (12) de l'empilement de sorte que les fibres de ces plis (12) présentent des orientations différentes par rapport à un axe principal de cet empilement.

5. Procédé selon l'une quelconque des revendications 1 à 4, **caractérisé en ce qu'**on introduit au moins un capteur de température dans ledit empilement ou on place au moins un capteur de température à la surface externe dudit empilement et **en ce qu'**on régule la puissance électrique en fonction d'un profil de température demandé.

6. Procédé selon l'une quelconque des revendications 1 à 5, **caractérisé en ce qu'**à l'étape b), on imprègne lesdits plis (12) d'une résine thermodurcissable ou thermoplastique.

7. Procédé selon la revendication 6, **caractérisé en ce que** l'imprégnation de ladite résine est réalisée par dépression.

8. Procédé selon l'une quelconque des revendications 1 à 7, **caractérisé en ce que** lesdits plis (12, 17) de fibres sont des plis (12) de fibres unidirectionnelles ou des plis (17) tissés.

## Patentansprüche

1. Verfahren zur Herstellung eines Verbundstoffteils, wobei Lagen (12) aus Fasern, die durchgehend und elektrisch leitend sind, gelegt werden, um einen Lagenstapel (12) auf einem Träger (11) zu bilden, **dadurch gekennzeichnet, dass** wenigstens die Seite des Trägers (11), die den Stapel trägt, elektrisch isolierend ist, und dadurch, dass die folgenden Schritte durchgeführt werden:
a) Einbringen eines elektrischen Anschlusses (13, 18) zwischen den Enden mindestens zweier Lagen (12), die in dem Stapel direkt übereinander platziert sind, und auf mindestens zwei gegenüberliegenden Seiten dieser Lagen (12),
b) wenn die Fasern trocken sind, Einbringen eines Harzes, um die Fasern zu imprägnieren,
c) Strömenlassen eines Stroms zwischen den elektrischen Anschlüssen (13, 18) durch die Lagen (12), um das Harz durch Erwärmung durch den Joule-Effekt zu härten oder das Harz durch Erwärmung durch den Joule-Effekt in den flüssigen Zustand zu bringen, um dessen Verfestigung zu gewährleisten.

2. Verfahren nach Anspruch 1, **dadurch gekennzeichnet, dass**, der Stapel aufweisend eine größere Abmessung entlang mindestens einer von der Längs- und Querachse des Teils, die Anordnung, die beim Schritt c) erhalten wird, entsprechend dem Maß des herzustellenden Teils formgeschnitten wird.

3. Verfahren nach Anspruch 1 oder 2, **dadurch gekennzeichnet, dass** beim Schritt a) wenigstens die elektrischen Anschlüsse (13, 18) zwischen den Enden zweier Lagen (12) eingebracht werden, die in der Mitte der Anordnung direkt übereinander platziert sind, um diese Anordnung im Kern zu erwärmen.

4. Verfahren nach einem der Ansprüche 1 bis 3, **dadurch gekennzeichnet, dass** wenigstens einige der Lagen (12) des Stapels so gelegt werden, dass die Fasern dieser Lagen (12) verschiedene Ausrichtungen bezogen auf eine Hauptachse dieses Stapels aufweisen.

5. Verfahren nach einem der Ansprüche 1 bis 4, **dadurch gekennzeichnet, dass** mindestens ein Temperatursensor in den Stapel eingebracht wird oder mindestens ein Temperatursensor auf der Außenfläche des Stapels platziert wird, und dadurch, dass die elektrische Leistung in Abhängigkeit von einem geforderten Temperaturprofil geregelt wird.

6. Verfahren nach einem der Ansprüche 1 bis 5, **dadurch gekennzeichnet, dass** beim Schritt b) die Lagen (12) mit einem wärmehärtbaren oder thermoplastischen Harz imprägniert werden.

7. Verfahren nach Anspruch 6, **dadurch gekennzeichnet, dass** das Imprägnieren des Harzes mittels Unterdruck durchgeführt wird.

8. Verfahren nach einem der Ansprüche 1 bis 7, **dadurch gekennzeichnet, dass** die Faserlagen (12, 17) unidirektionale Faserlagen (12) oder gewebte Lagen (17) sind.

## Claims

1. Process for producing a composite material part, in which plies (12) of continuous and electrically conducting fibers are deposited to form a stack of plies (12) on a support (11),
**characterized in that** at least the face of said support (11) bearing said stack is electrically insulating, and **in that** the following steps are carried out:
a) introducing an electrical terminal (13, 18) between the ends of at least two plies (12) placed one directly above the other in said stack, and on at least two opposite sides of these plies (12),
b) when said fibers are dry, introducing a resin to impregnate said fibers,
c) making a current flow between said electrical terminals (13, 18) through said plies (12) in order to harden said resin by Joule heating or to bring said resin to the liquid state by Joule heating with a view to consolidating it.

2. Process according to Claim 1, **characterized in that** since said stack exhibits a longer dimension along at least one of the longitudinal and transverse axes of said part, the hardened assembly obtained at step c) is cut out according to the measurements of the part to be produced.

3. Process according to either Claim 1 or Claim 2, **characterized in that** at step a), at least said electrical terminals (13, 18) between the ends of two plies (12) placed one directly above the other are introduced at the center of said stack in order to heat this stack at the core.

4. Process according to any one of Claims 1 to 3, **characterized in that** at least some of said plies (12) of the stack are deposited such that the fibers of these plies (12) exhibit different orientations relative to a main axis of this stack.

5. Process according to any one of Claims 1 to 4, **characterized in that** at least one temperature sensor is introduced in said stack or at least one temperature sensor is placed on the outer surface of said stack and **in that** the electrical power is controlled as a function of a required temperature profile.

6. Process according to any one of Claims 1 to 5, **characterized in that** at step b), said plies (12) are impregnated with a thermoset or thermoplastic resin.

7. Process according to Claim 6, **characterized in that** the impregnation of said resin is performed by vacuum means.

8. Process according to any one of Claims 1 to 7, **characterized in that** said plies (12, 17) of fibers are plies (12) of unidirectional fibers or woven plies (17) .
